# EUROPÄISCHE PATENTSCHRIFT

(11) **EP 2 374 657 B1**
(45) Veröffentlichungstag und Bekanntmachung des Hinweises auf die Patenterteilung: **08.05.2019**
(21) Anmeldenummer: 11002098.9
(22) Anmeldetag: 14.03.2011
(51) Int. Cl.: B60N 2/75

(54) **Armlehne und Bedienarbeitsplatz mit einer solchen Armlehne**
Armrest and operating workplace with such an armrest
Accoudoir et poste de commande doté d'un tel accoudoir

(30) Priorität: 09.04.2010 DE 102010014348
(43) Veröffentlichungstag der Anmeldung: 12.10.2011
(73) Patentinhaber: BOMAG GmbH, 56154 Boppard (DE)
(72) Erfinder: Haubrich, Thomas, 56290 Gödenroth (DE); Klein, Thomas, 56653 Wehr (DE)
(74) Vertreter: Lang, Friedrich

(56) Entgegenhaltungen:
- EP-A1- 1 155 902
- WO-A1-2007/075031
- DE-A1-102004 052 757
- FR-A1- 2 770 468
- US-A- 4 914 976
- US-B1- 7 387 341

## Beschreibung

Die Erfindung betrifft einen Maschinenführersitz mit einer Sitzfläche, einer in Längsrichtung der Sitzfläche und der vorderen Sitzkante der Sitzfläche gegenüberliegend angeordneten Rückenlehne und wenigstens einer seitlich zur Sitzfläche angeordneten Armlehne. Die Längsrichtung der Sitzfläche ist durch die nach vorne gerichtete Blickrichtung eines im Maschinenführersitz sitzenden Bedieners festgelegt. Die vordere Sitzkante ist der Bereich des Sitzes, in dem die Beine abgewinkelt werden. Zu wenigstens einer Seite der Sitzfläche weist der Maschinenführersitz eine seitlich zur Sitzfläche angeordnete Armlehne auf, umfassend ein Basisteil, eine Armauflage und mindestens ein Bedienelement. Das Basisteil bildet somit die Halterung für die Armauflage und das mindestens eine Bedienelement. Die Armauflage dient dazu, dass der Maschinenführer in der Sitzposition seinen Arm zur Entlastung dort auflegen kann. Bei dem mindestens einen Bedienelement handelt es sich beispielsweise um ein Multifunktionsbedienelement, insbesondere mit einer Joystick-Steuerung, über die verschiedene Maschinenfunktionen, wie beispielsweise Vorwärtsfahrt und Rückwärtsfahrt, gesteuert werden können. Die Armauflage und das mindestens eine Bedienelement sind oben liegend am Basisteil angeordnet, wobei die Armauflage im in Längsrichtung hinteren Bereich bzw. dem näher an der Rückenlehne liegenden Bereich des Basisteils angeordnet ist und das mindestens eine Bedienelement im in Längsrichtung vorderen Bereich der Armlehne bzw. ungefähr auf Höhe der vorderen Sitzkante der Sitzfläche angeordnet ist. Bezogen auf die Längsrichtung sind die Armauflage und das mindestens eine Bedienelement somit hintereinander liegend zu einander am Basisteil angebracht.

Üblicherweise ist die Armauflage fest bzw. starr am Basisteil befestigt und die Armlehne kann, wenn überhaupt, höchstens als Gesamteinheit gegenüber dem Sitz justiert und fixiert werden. Zur Bedienung des mindestens einen Bedienelements bewegt sich der auf der Armauflage aufliegende Arm des Maschinenführers daher üblicherweise immer relativ zur Armauflage, insbesondere bei nach vorn und nach hinten gerichteten Bedienbewegungen. Bei derartigen Bewegungen muss der Fahrer somit entweder stets seinen auf der Armauflage aufliegenden Arm entlasten, was insbesondere bei zeitlich langen Arbeitsprozessen anstrengend ist und als störend empfunden wird. Alternativ kann der Maschinenführer seinen Arm gegenüber der Armauflage hin und her rutschen, wobei die dabei auftretenden Reibungserscheinungen ebenfalls als äußerst störend empfunden werden und beispielsweise zum Aufscheuern der entsprechenden Hautareale führen kann.

Das Dokument EP1155902A1 wird als nächstliegender Stand der Technik betrachtet und es beschreibt einen Maschinenführersitz entsprechend dem Oberbegriff des Anspruchs 1.

Die Aufgabe der Erfindung besteht somit darin, einen Maschinenführersitz und eine Baumaschine mit einem solchen Maschinenführersitz anzugeben, bei dem die vorstehenden Probleme nicht mehr auftreten, um dem Maschinenführer auf diese Weise einen höheren Bedienungskomfort zu ermöglichen.

Die Lösung der Aufgabe gelingt mit einem Maschinenführersitz einer Baumaschine und einer Baumaschine mit einem solchen Maschinenführersitz gemäß den unabhängigen Ansprüchen. Bevorzugte Weiterbildungen sind in den abhängigen Schutzansprüchen angegeben.

Zur Lösung der Aufgabe ist es erfindungsgemäß vorgesehen, dass der Maschinenführersitz eine Armauflage aufweist, die über eine Führungseinrichtung am Basisteil der Armlehne gelagert ist, wobei die Führungseinrichtung in der Weise ausgebildet ist, dass die Armauflage in einem begrenzten Längsverschiebebereich entlang der Längsrichtung der Armlehne gegenüber dem Basisteil frei verschiebbar ist. Ein wesentlicher Aspekt der Erfindung liegt somit zunächst darin, dass die Armauflage nicht, wie bisher üblich, starr am Basisteil der Armlehne gelagert ist, sondern zur Verbindung der Armauflage mit dem Basisteil eine Führungseinrichtung vorgesehen ist, die eine Beweglichkeit der Armauflage gegenüber dem starren Basisteil ermöglicht. Die Beweglichkeit der Armauflage ist dabei nicht unbegrenzt, sondern wird durch die Führungseinrichtung in einem definierten und begrenzten Längsverschiebebereich ermöglicht. Die Armauflage ist mit anderen Worten somit entlang dem Basisteil in Längsrichtung bzw. Blickrichtung des im Maschinenführersitz sitzenden Bedieners beweglich. Erfindungsgemäß ist es vorgesehen, dass die Armauflage zur Erhöhung des Komforts somit nicht allein durch entsprechende Einstelloptionen fix festgelegt wird, sondern frei bzw. nicht feststellbar verschiebbar ist. Drückt der im Maschinenführersitz sitzende Bediener somit das mindestens eine Bedienelement beispielsweise nach vorne, kann der auf der Armauflage liegende Arm, konkret Unterarm, dieser Bewegung folgen, indem sich die Armauflage gemeinsam mit dem Arm am Basisteil nach vorne zu dem mindesten einen Bedienelement hin verschiebt. Gleiches gilt umgekehrt für beispielsweise eine Rückwärtsbewegung des mindestens einen Bedienelements. Die Armauflage kann der Bewegung des Arms des Bedieners somit folgen. Insbesondere der Unterarm des Bedieners muss somit nicht mehr auf der Armauflage hin und her rutschen, sondern kann die Bedienbewegungen zusammen mit dem auf der Armauflage aufliegenden Arm des Bedieners vollziehen. Den Bediener ist es daher möglich, seinen Arm kontinuierlich und über den gesamten Bedienvorgang hinweg auf der Armauflage abzustützen, was zu einer erheblichen Entlastung des Bedieners führt. Darüber hinaus kann stets die optimale Relativpositionierung zwischen Arm, dem mindestens einen Bedienelement, insbesondere einem Fahrhebelgriff bzw. einer Joystick-Steuerung, und der Armauflage beibehalten werden, was letztendlich eine wesentlich Steigerung der Präzision der Maschinensteuerung ermöglicht.

Vorzugsweise umfasst die Führungseinrichtung eine Linearführung. Eine Linearführung zeichnet sich dadurch aus, dass sie eine Führung in eine Raumachse, bevorzugt entlang der Vorwärtsblickrichtung des Bedieners bzw. der Längsrichtung der Sitzfläche, gewährleistet. Damit ist sichergestellt, dass sich die Armauflage relativ zum Basisteil auf einer kontrollierten Verschiebebahn bewegt. Sofern nachfolgend von der Längsrichtung ohne weitere Angaben die Rede ist, bezieht sich die Längsrichtung auf die Richtung eines gerade nach vorn und im Maschinenführersitz sitzenden Bedieners. Die Längsrichtung verläuft somit von der Rücklehne kommend zur vorderen Sitzkante über die Sitzfläche.

Bevorzugt ist die Führungseinrichtung selbstpositionierend in der Weise ausgebildet, dass die Armauflage selbsttätig im belastungsfreien Zustand bezüglich ihrer Positionierung in Längsrichtung der Armlehne in eine definierte Ausgangsstellung verfährt. Diese Ausführungsform zeichnet sich dadurch aus, dass die Armauflage von verschiedenen verschobenen Positionen relativ zum Basisteil der Armlehne bei Entlastung, beispielsweise durch Anheben des Arms beim Aussteigen aus der Maschine, stets in dieselbe Ausgangsstellung zurückfährt. Für den Bediener ist somit gewährleistet, dass sich die Armauflage, beispielsweise bei Inbetriebnahme der Baumaschine, immer in der gleichen Ausgangsposition befindet. Eine solche Ausführungsform ist zu dem besonders sicher, da gewährleistet ist, dass beispielsweise Notfalleinrichtungen, wie ein Notausknopf, in einer Gefahrensituation leicht zugänglich sind und nicht durch die verschobene Armauflage am Basisteil verdeckt werden. Durch einfaches Anheben des Armes schnellt die Armauflage in ihre Ausgangstellung zurück und der im Maschinenführersitz sitzende Bediener kann sicher an die entsprechende Notfalleinrichtung heranlangen.

Die konkrete Ausbildung der Selbstpositionierungsfunktion der Führungseinrichtung kann durch verschiedene konstruktive Maßnahmen realisiert werden. So sind beispielsweise pneumatische oder motorgetriebene Varianten, insbesondere in Kombination mit einer geeigneten Linearführung, möglich. Bevorzugt sind jedoch mechanische Lösungen, insbesondere in Form einer geeigneten Federbeaufschlagung, da diese sich beispielsweise durch eine hohe Ausfallsicherheit auszeichnen.

Grundsätzlich kann die Ausgangsstellung so gewählt sein, dass sich die Armauflage ausgehend von ihrer Ausgangsstellung gegenüber dem Basisteil ausschließlich nach vorne oder ausschließlich nach hinten verschieben lässt. Idealerweise ist die Führungseinrichtung jedoch in der Weise ausgebildet, dass die Armauflage gegenüber der Ausgangsstellung in Längsrichtung der Armlehne in einem begrenzten Bereich frei nach vorne und nach hinten verschiebbar ist. Die Ausgangsstellung ist somit in Bezug auf den begrenzten Längsverschiebebereich eher mittig gewählt, um von der Ausgangsstellung ausgehend den Bediener sowohl eine nach vorne als auch eine nach hinten gerichtete Bewegung des Armes zusammen mit der Armauflage relativ zum Basisteil zu ermöglichen.

Es treten häufig Situationen auf, in denen sich der im Maschinenführersitz sitzende Bediener bezogen auf die Längsrichtung im Maschinenführersitz zur Seite wendet, um insbesondere den Seitenbereich der Baumaschine, beispielsweise beim kantennahen Arbeiten, insbesondere Walzen oder Fräsen, besser beobachten zu können. Wendet er sich dabei zur Seite der Armlehne hin, drückt der Arm von der Sitzfläche weg gegen die Armauflage. Blickt er in die andere Richtung, zieht der Arm auf der Armauflage zur Sitzfläche hin. Dies ist beispielsweise auch dann der Fall, wenn der Bediener sich von seiner sitzenden Position hin zu einer stehenden Position bewegt. Um auch die Seitenbewegungen des auf der Armauflage aufliegenden Armes ausgleichen zu können, sieht die Ausbildung der Führungseinrichtung in der Weise vor, dass die Armauflage in einem begrenzten Seitenverschiebebereich frei seitlich verschiebbar ist. Die Führungseinrichtung ermöglicht somit neben der in Längsrichtung orientierten Längsverschiebebewegung eine in der Horizontalebene im Wesentlichen rechtwinklig dazu verlaufenden Seitenverschiebebewegung. Damit ist es möglich, den Arm im Bereich der begrenzten Verschiebebereiche in der Horizontalebene zusammen mit der Armauflage frei zu bewegen. Auch bezüglich der seitlichen Verschiebbarkeit ist eine Selbstpositionierungsfunktion in der Führungseinrichtung vorgesehen.

Bevorzugt umfasst die Führungseinrichtung einen Gleitschlitten, der über ein gegenüber dem Basisteil ortsfestes Gleitlager verschiebbar am Basisteil der Armlehne gelagert ist, wobei die Armauflage an dem Gleitschlitten angeordnet ist. Der Gleitschlitten ist somit am Gleitlager des Basisteils der Armlehne geführt.

Der Gleitschlitten weist vorzugsweise einen sich im Wesentlichen horizontal erstreckenden Bereich und an den in Längsrichtung gegenüberliegenden Seiten dieses Bereichs jeweils ein zum Basisteil hin umgebogene Lasche auf. Zwischen den beiden Laschen ist wenigstens eine Führungsschiene angeordnet, die in einem ortsfest am Basisteil angeordneten Gleitlager geführt ist. Zur Längsverschiebung der Armauflage läuft der Gleitschlitten bei dieser Ausführungsform zusammen mit dem Gleitschlitten entlang dem Gleitlager. Der sich im Wesentlichen horizontal erstreckende Bereich ist vorzugsweise zusammen mit den beiden einander gegenüberliegend angeordneten umgebogenen Laschen als ein Bauteil ausgeführt. Bei der Führungsschiene kann es sich beispielsweise um eine Rohrschiene handeln, deren Längsachse in Längsverschieberichtung orientiert ist.

Um die Selbstpositionierungsfunktion des Gleitschlittens zu ermöglichen, verläuft bevorzugt zwischen den beiden Laschen eine Federführungsschiene, an der eine Rückstellfeder angeordnet ist. Die Rückstelldruckfeder wird somit durch Zusammendrücken gespannt und übt im komprimierten Zustand eine Rückstellkraft in ihre nicht komprimierte Positionierung aus. Die Federführungsschiene ist bei dieser Ausführungsform durch die Rückstellfeder hindurchgeführt. Auf diese Weise ist gewährleistet, dass die Rückstelldruckfeder bei einer Komprimierung nicht willkürlich ausweicht, sondern entlang ihrer Längsachse zusammengedrückt wird und die Rückstellkraft entlang der Längsachse der Rückstelldruckfeder wirkt.

An den axialen Enden der Rückstelldruckfeder ist vorzugsweise wenigstens ein entlang der Federführungsschiene verschiebbares Anschlagelement angeordnet, gegen das die Rückstelldruckfeder anschlägt und durch das sie bei fortgesetzter Verschiebebewegung zur Rückstelldruckfeder hin zusammengedrückt wird. Am Basisteil ist dazu ein Anschlag vorhanden, gegen den das Anschlagelement anschlägt und dadurch an einer Fortsetzung der Verschiebebewegung des Anschlagelementes in eine Richtung verhindert. Wird die Verschiebebewegung des Gleitschlittens fortgesetzt, drückt die Rückstelldruckfeder zunehmend gegen das festgestellte Anschlagelement und baut dadurch eine Rückstellkraft auf.

Um eine in Bezug auf den begrenzten Längsverschiebebereich mittige Positionierung der Ausgangsstellung zu ermöglichen, ist es vorzugsweise vorgesehen, dass an beiden axialen Enden der Rückstelldruckfeder jeweils ein entlang der Federführungsschiene verschiebbares Anschlagelement angeordnet ist, und dass am Basisteil zwei in Längsrichtung zueinander beabstandet angeordnete Anschläge vorhanden sind in der Weise, dass die Rückstellfunktion bzw. das Zusammendrücken der Rückstelldruckfeder ausgehend von der Ausgangsstellung der Armauflage in eine Verschieberichtung durch das Anschlagen eines Anschlagelementes gegen den Anschlag und in die andere Verschieberichtung durch das Anschlagen des anderen Anschlagelements gegen den anderen Anschlag am Basisteil ausgelöst wird.

Die Führungsschiene und die Federführungsschiene des Tragschlittens können separate Komponenten sein. Um die Anzahl der erforderlichen Komponenten der Führungseinrichtung zu reduzieren, kann es jedoch auch vorgesehen sein, dass die Führungsschiene gleichzeitig die Funktion der Federführungsschiene erfüllt. Die Rückstelldruckfeder wird bei dieser Ausführungsform somit von der Führungsschiene entlang ihrer Längsachse durchlaufen.

Ist zusätzlich zur Längsverschieblichkeit der Armauflage ferner eine seitliche Verschiebbarkeit der Armauflage vorgesehen, kann der Gleitschlitten in einer weiteren bevorzugten Ausführungsform wenigstens ein Langloch zur Führung der seitlichen Verstellbewegung der Armauflage gegenüber dem Basisteil aufweisen, in das ein an der Armauflage angeordnetes Führungselement, beispielsweise ein Führungszapfen mit einer Führungsbuchse, eingreift. Mit dem Langloch und dem Führungselement wird insgesamt somit eine Langlochführung erhalten, wobei der Längsachse des Langlochs zum Erhalt der seitlichen Bewegbarkeit seitlich bzw. orthogonal zur Längsrichtung der Armlehne verläuft.

Grundsätzlich sind neben den vorstehend genannten Ausführungsformen mit einer seitlich am Sitz angeordneten erfindungsgemäßen Armlehne auch Ausführungsformen möglich, die auf beiden Seiten jeweils eine solche Armlehne aufweisen.

Ein weiterer wesentlicher Aspekt der Erfindung liegt darin, dass die Längsverschieblichkeit der Armauflage relativ zum Basisteil und, sofern vorhanden, auch die seitliche Verschiebbarkeit, in jeweils begrenztem Ausmaß möglich ist. Damit ist gewährleistet, dass die Armauflage beispielsweise nicht bei übermäßiger Verschiebung aus der Führungseinrichtung herausgeschoben wird. Dazu ist beispielsweise eine Verschiebebegrenzung in Form eines Begrenzungsanschlags am Basisteil vorgesehen, gegen den beispielsweise der Gleitschlitten bei maximaler Verstellung anschlägt und an einem Herausrutschen aus der Führungseinrichtung gehindert wird. Dazu kann beispielsweise am Basisteil ein zum Tragschlitten hingerichteter Vorsprung vorgesehen sein, gegen den eine der Laschen bei maximaler Verstellung anschlägt. Eine weitere Möglichkeit zum Erhalt eines Begrenzungsanschlags kann durch den Randbereich einer Langlochführung erhalten werden.

Ein weiterer Aspekt der Erfindung liegt in einer Baumaschine, insbesondere einer Straßen, speziell Kaltfräse, einem Recycler, einem Stabilisierer oder einer Straßenwalze, speziell Tandemwalze, mit einem solchen Maschinenführersitz.

Nachstehend wird die Erfindung anhand des in den Figuren angegebenen Ausführungsbeispiels näher erläutert. Es zeigen schematisch:
- Fig. 1: die Draufsicht auf eine Baumaschine, konkret eine Tandemwalze;
- Fig. 2a: Seitenansicht eines Maschinenführersitzes mit einem sitzenden Bediener;
- Fig. 2b: Draufsicht auf den Maschinenführersitz aus Fig. 2a;
- Fig. 2c: Seitenansicht des Maschinenführersitzes aus den Figuren 2a und 2b;
- Fig. 2d: Ausschnittsvergrößerung der Armauflage und der Führungseinrichtung in Ausgangsstellung aus Fig. 2c;
- Fig. 3a: Seitenansicht des Maschinenführersitzes aus den Figuren 2a bis 2d mit nach vorne geschobener Armauflage;
- Fig. 3b: Ausschnittsvergrößerung der Armauflage und der Führungseinrichtung aus Fig. 3a;
- Fig. 4a: Maschinenführersitz aus den Figuren 2a bis 2d mit nach hinten verschobener Armauflage;
- Fig. 4b: Ausschnittsvergrößerung der Armauflage und der Führungseinrichtung aus Fig. 4a;
- Fig. 5a: Rückansicht auf die Armlehne;
- Fig. 5b: Horizontalschnitt durch die Führungseinrichtung aus Fig. 5a;
- Fig. 5c: Vertikalschnittansicht in Längsrichtung durch die Armauflage und die Führungseinrichtung;
- Fig. 6a: Draufsicht auf den Maschinenführersitz gemäß der vorhergehenden Figuren mit seitlich ausgestellter Armauflage; und
- Fig. 6b: Draufsicht auf den Maschinenführersitz aus Fig. 6a mit zur Sitzfläche hin verschobener Armauflage.

Gleiche Bauteile sind in den Figuren mit gleichen Bezugszeichen bezeichnet. Der Übersichtlichkeit halber ist nicht jedes sich wiederholende Bauteil in jeder der Figuren separat gekennzeichnet.

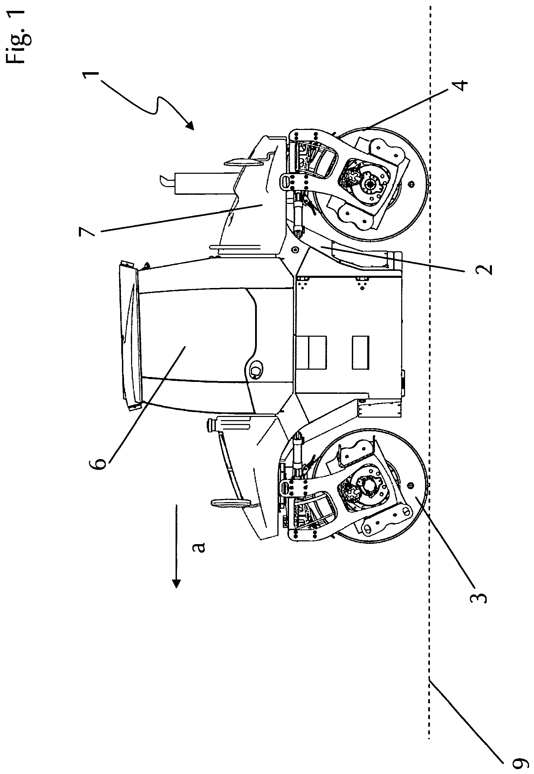

Die Seitenansicht aus Fig. 1 zeigt eine typische Baumaschine 1, konkret eine sogenannte Tandemwalze. Die wesentlichen Elemente der Baumaschine 1 sind ein Maschinenrahmen 2, ein Vorderbandage 3 und ein Hinterbandage 4. Weiter ist eine Antriebsvorrichtung 7 vorhanden, die die zum Antrieb der Baumaschine 1 benötigte Antriebsenergie liefert. Zur Bodenbearbeitung wird die Baumaschine 1 in Pfeilrichtung a (Vorwärtsrichtung) über den zu bearbeitenden Boden 9 bewegt. Ein Bediener der Maschine sitzt in einem erfindungsgemäßen Maschinenführersitz (in Fig. 1 nicht sichtbar) in der Fahrerkabine 6 und steuert von dort die Maschinenfunktionen.

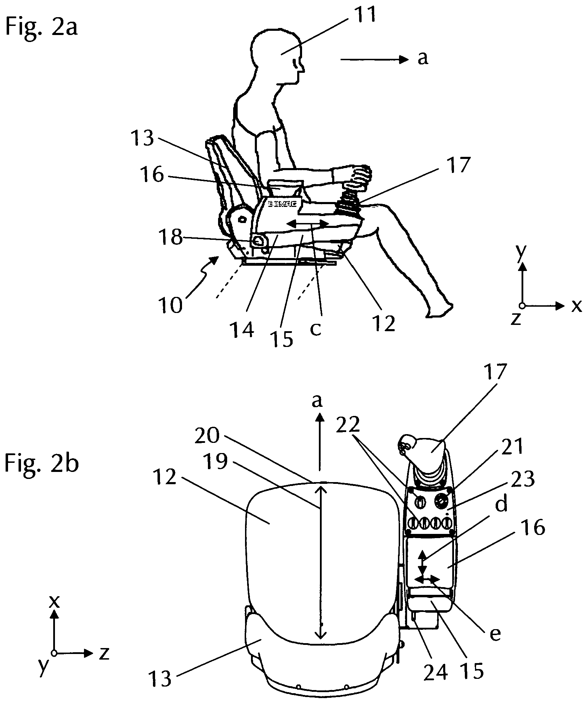

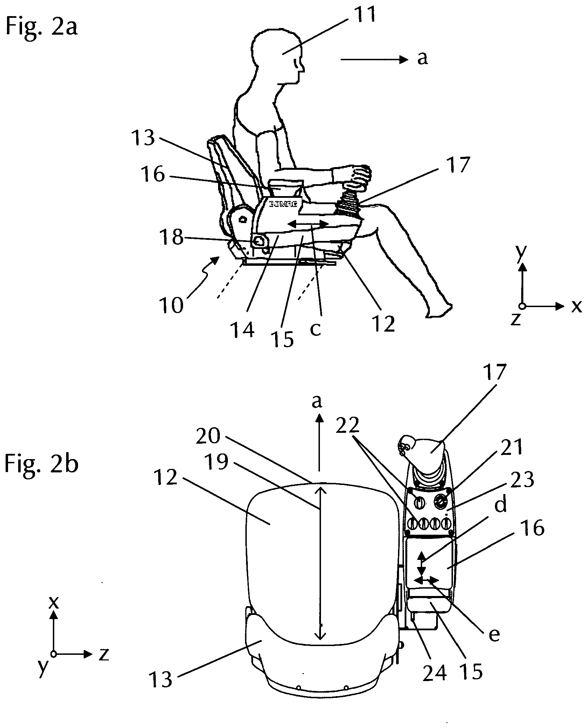

Dieser Maschinenführersitz 10 ist in Fig. 2a mit einem darin sitzenden Bediener 11 wiedergegeben, wobei der Maschinenführersitz 10 selbstverständlich nicht frei schwebend sondern über entsprechende Verbindungen, die in Fig. 2a strichliert angedeutet sind, in der Fahrerkabine 6 untergebracht ist. Wesentliche Elemente des Maschinenführersitzes 10 sind eine Sitzfläche 12, eine Rückenlehne 13 sowie eine seitlich zur Sitzfläche 12 angeordnete Armlehne 14. Seitlich bezieht sich somit auf die Positionierung neben dem in dem Maschinenführersitz 10 sitzenden Bediener 11, sodass dieser die Armlehne 14 bequem zum Auflegen seines Armes nutzen kann.

Die Armlehne 14 weist neben einem unteren Basisteil 15 eine Armauflage 16 und ein Multifunktions-Bedienelement 17 auf, die beide oberhalb des Basisteils 15 angeordnet sind. Ferner ist eine Klemmschraube 18 vorhanden, die durch eine Langlochführung im Basisteil 15 (in Fig. 2a nicht sichtbar) hindurchgeführt ist. Durch ein Lösen der Klemmschraube 18 kann die gesamte Armlehne 14 entlang Pfeilrichtung c verstellt werden, um eine an die jeweiligen Proportionen des Bedieners 11 angepasste Feineinstellung zu ermöglichen. Diese Verstellmöglichkeit erlaubt allein ein Festsetzung der Armlehne in verschiedenen Positionen und ist zur Anpassung des Maschinenführersitzes 10 an die Proportionen des Bedieners 11 vorgesehen. Selbstverständlich ist auch der Maschinenführersitz 10 an sich höhenverstellbar sowie die Winkelstellung der Rückenlehne 13 zur Sitzfläche 12 einstellbar.

Die folgenden Figuren 2b bis 6b beziehen sich alle auf den Maschinenführersitz 10 in der in Fig. 2a gezeigten Ausführungsform, wobei aus Übersichtlichkeitsgründen in den nachfolgenden Figuren der Bediener 11 nicht mehr wiedergegeben ist.

Die Draufsicht aus Fig. 2b veranschaulicht zunächst die Lage der Längsachse 19 der Sitzfläche 12, die parallel zur Vorwärts- bzw. Blickrichtung a verläuft. Die Längsachse 19 der Sitzfläche 12 erstreckt sich somit von der Rückenlehne 13 hin zur vorderen Sitzkante 20 der Sitzfläche 12. Aus Fig. 2b ist ferner ersichtlich, dass im Basisteil 15 der Armlehne 14 neben dem Multifunktions-Bedienelement 17 weitere Bedienelemente, konkret ein Notausschalter 21 sowie die Bedienschalter 22, angeordnet sind. Der Notausschalter 21 und die weiteren Bedienschalter 22 sind zusammengefasst in einem Bedienfeld 23, welches in Vorwärtsrichtung a zwischen der Armauflage 16 und dem Multifunktions-Bedienelement 17, welches an der vorderen Kante der Armlehne 14 angeordnet ist, liegt. Dabei sind die Schalter des Bedienfeldes 23 von oben zugänglich, sodass der Bediener 11 beispielsweise in Gefahrensituationen leicht an den Notausschalter 21 heranlangen kann. In Fig. 2b ist die Armlehne 14 ferner in Pfeilrichtung c gegenüber der Rückenlehne 13 nach vorne verschoben, sodass ein Teil der Langlochführung 24, in der die Armlehne 14 in ihrer Gesamtheit relativ zur Sitzfläche 12 geführt ist, sichtbar ist. Die Feststellung dieser Verschiebemechanik erfolgt im Wesentlichen über die in Fig. 2a sichtbare Klemmschraube 18, die in eine weitere im rechten Winkel zur Langlochführung 24 verlaufende Langlaufführung (in Fig. 2b nicht sichtbar) eingreift.

Ein wesentlicher Aspekt des erfindungsgemäßen Maschinenführersitzes 10 liegt darin, dass die Armauflage 16 relativ zum Basisteil 15 der Armlehne 14 längsverschieblich bzw. entlang der Längsachse 19 der Sitzfläche verschiebbar am Basisteil gelagert ist. Die Verschiebbarkeit der Armauflage 16 ist mit Pfeilrichtung d gekennzeichnet. Im Unterschied zu der Justierbarkeit der gesamten Armlehnen über die mit der Klemmschraube 18 betätigte Justiereinrichtung, die eine feste bzw. starre Einstellung der Armlehne 14 gegenüber der Sitzfläche 12 ermöglicht, ist die Armauflage 16 am Basisteil 15 der Armlehne 14 in einem begrenzten Bereich frei in Pfeilrichtung d längsverschieblich gelagert. "Frei" ist dabei in der Weise zu verstehen, dass keine Feststelleinrichtung vorhanden ist, die die Armauflage 16 gegenüber dem Basisteil 15 feststellt. In diesem begrenzten Längsverschiebebereich ist die Armauflage 16 vielmehr stets verschieblich bzw. "schwimmend", sodass die Armauflage 16 den Bedienbewegungen, insbesondere am Multifunktions-Bedienelement 17, des Bedieners folgen kann. Drückt der Bediener 11 das Multifunktions-Bedienelement 17 in Fig. 2a beispielsweise nach vorne, ist es nicht erforderlich, den auf der Armauflage 16 aufliegenden Arm zu entlasten oder entlang der Armauflage 16 zu verrutschen. Die Armauflage 16 ist vielmehr aufgrund ihrer freien Längsverschieblichkeit in der Lage, der Bedienbewegung des Bedieners 11 nach vorne und nach hinten (bzw. in Pfeilrichtung a und entgegen Pfeilrichtung a) zu folgen, was einen erheblichen Komfortgewinn für den Bediener 11 bedeutet.

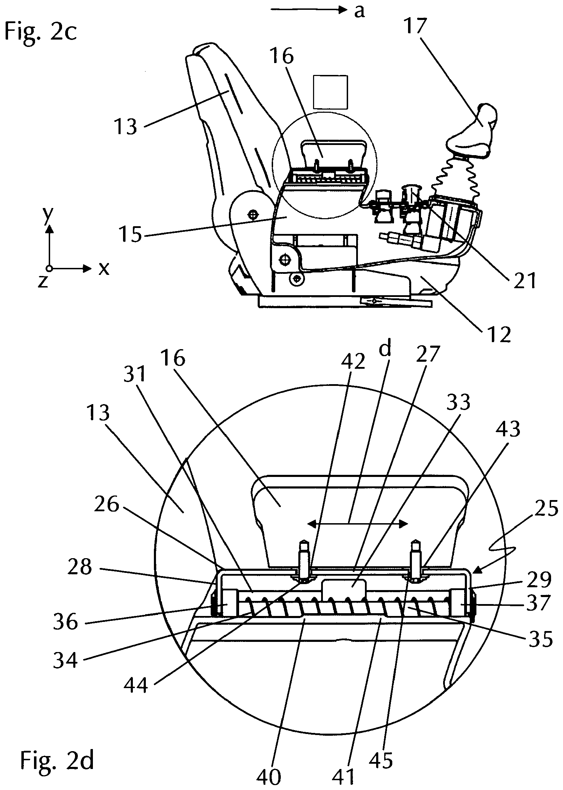

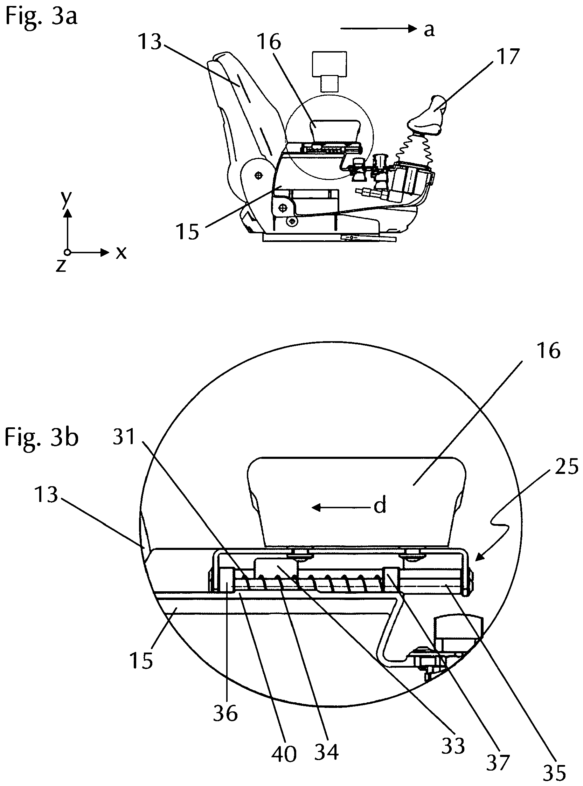

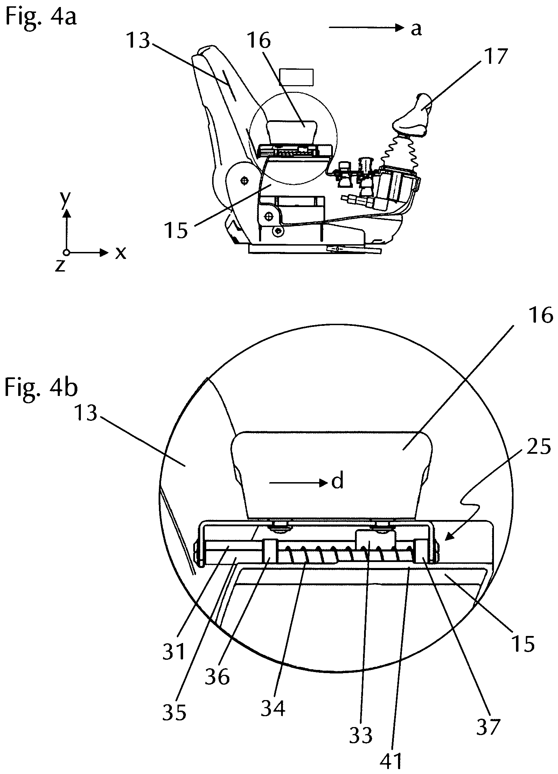

Konkret ist die Armauflage 16 über eine Führungseinrichtung 25 am Basisteil 15 der Armlehne 14 gelagert, deren Aufbau und Funktionsweise in den Figuren 2c bis 6b näher angegeben ist. Fig. 2c zeigt den Maschinenführersitz 10 aus Fig. 2a, wobei vom Basisteil 15 eine Vorderabdeckung entfernt wurde, um den Blick ins Innere der Armlehne 14 freizugeben. Fig. 2d gibt den in Fig. 2c eingekreisten Bereich in einer Ausschnittsvergrößerung wieder. Die Figuren 2a bis 2d zeigen die Armauflage 16 relativ zum Basisteil 15 in der bezüglich ihres Längsverschiebebereiches mittigen Ausgangsstellung. Die Figuren 3a und 3b entsprechen den Figuren 2c und 2d, wobei sich die Armauflage in ihrer maximal nach vorne verschobenen Position befindet. Die Figuren 4a und 4b zeigen dagegen die Armauflage 16 in ihrer maximal nach hinten verschobenen Position. In dem von den in den Figuren 3a/3b und 4a/4b gezeigten Maximalstellungen begrenzten Verstellbereich ist die Armauflage 14 gegenüber dem Basisteil 15 frei verschiebbar.

Ein wesentliches Element der Führungseinrichtung 25 ist ein Gleitschlitten 26, der zwischen dem Basisteil 15 und der Armauflage 16 angeordnet ist. Der Gleitschlitten 26 weist einen im Wesentlichen in der Horizontalebene liegenden Hauptteil 27 auf und zwei Laschen bzw. Umbiegungen 28 und 29, die vom Hauptteil 27 hin zum darunter liegenden Basisteil 15 umgebogen sind. Zwischen den Laschen 28 und 29 sind Führungselemente vorhanden, die letztendlich eine lineare Längsführung der Armauflage 16 gegenüber dem Basisteil 15 zusammen mit dem Gleitschlitten 26 ermöglichen.

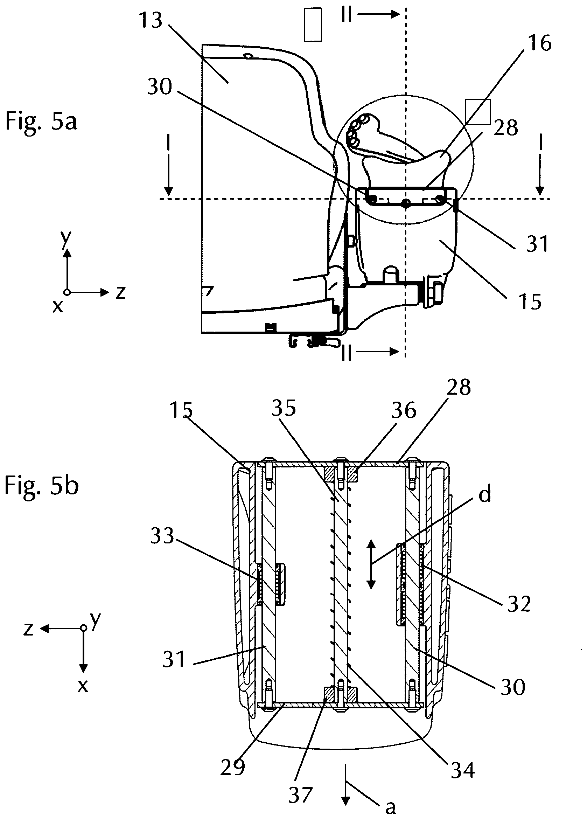

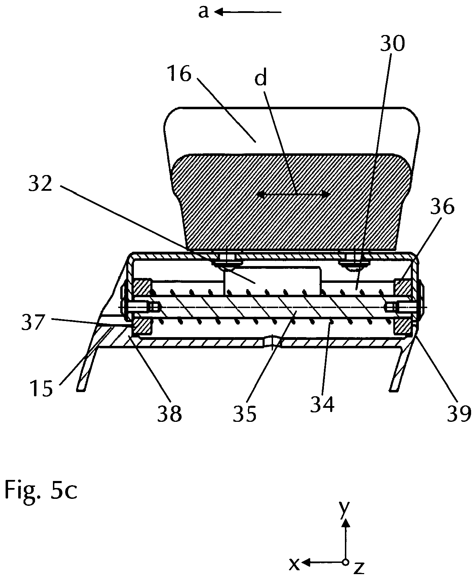

Hierzu wird zunächst zur weiteren Verdeutlichung des Aufbaus und der Funktionsweise der Führungseinrichtung 25 Bezug auf die Figuren 5a, 5b und 5c genommen. Die Fig. 5a zeigt Ausschnittsweise die Rückansicht auf den Maschinenführersitz 10 aus Fig. 2a. Fig. 5b ist eine Schnittansicht entlang der gestrichelten Linie I in Fig. 5a und Fig. 5c eine Schnittansicht entlang der Schnittlinie II in Fig. 5a. Die Blickrichtungen auf die Schnittansicht sind in Fig. 5a jeweils durch die entsprechenden Pfeile angegeben. Ein wesentliches Element der Führungseinrichtung 25 ist eine Linearführung, umfassend zwei zwischen den Laschen 28 und 29 parallel verlaufende Führungsschienen 30 und 31. Bei den Führungsschienen 30 und 31 handelt es sich jeweils um ein rundes Stabelement, was über entsprechende Schraubverbindungen stirnseitig mit jeweils der Lasche 28 und 29 verbunden ist. Die Führungsschienen 30 und 31 liegen in der Horizontalebene und verlaufen mit ihren Längsachsen in Richtung der Längsverschieberichtung d der Armauflage 16 relativ zum Basisteil 15. Jede der Führungsschienen 30 und 31 des Gleitschlittens 26 ist jeweils über ein Gleitlager 32, 33 am Basisteil 15 gelagert, entlang dem die Führungsschienen 30 bzw. 31 geführt sind. Da die Armauflage 16 am Gleitschlitten 26 angeordnet ist, ist diese somit zusammen mit dem Gleitschlitten 26 entlang der Führungsschienen 30 und 31 gegenüber dem Basisteil 15 längsverschieblich.

Die Führungseinrichtung 25 ist ferner in der Weise ausgebildet, dass der Gleitschlitten 26 selbstpositionierend ausgeführt ist. Der Gleitschlitten 26 verfährt somit im unbelasteten Zustand selbsttätig in seine bezüglich des gesamten Längsverschiebebereichs relativ zur Verschieberichtung d mittige Ausgangsstellung. Die Fähigkeit zur Selbstpositionierung wird bei der Führungseinrichtung 25 gemäß den Figuren 2a bis 6b im Wesentlichen konkret durch eine Rückstelldruckfeder 34 erreicht, die mit ihrer Längsachse parallel zu den Führungsschienen 30 und 31 zwischen den Laschen 28 und 29 des Gleitschlittens 26 angeordnet ist. Entlang ihrer Längsachsen ist durch die Rückstelldruckfeder 34 hindurch eine Federführungsschiene 35 geführt, die stirnseitig an den Laschen 28 und 29 fixiert ist.

Auf der Federführungsschiene 35 sind ferner zwischen den Laschen 28 und 29 zwei Anschlagelemente 36 und 37 entlang der Längsachse der Federführungsschiene 35 verschiebbar angeordnet. Die Längsachse der Federführungsschiene verläuft parallel zu den Längsachsen der Führungsschienen 30 und 31 und ist in der Horizontalebene zwischen den beiden Führungsschienen 30 und 31 angeordnet. Die beiden Anschlagelemente 36 und 37 werden von der Rückstelldruckfeder 34 auseinander und gegen die Innenseiten der Laschen 28 und 29 gedrückt. Die Anschlagelemente 36 und 37 schlagen in der Ausgangsstellung des Gleitschlittens 26, wie beispielsweise in Fig. 2d gezeigt, gegen die im Basisteil 15 angeordneten Anschläge 38 und 39 an, deren Lage beispielsweise in Fig. 2d näher angegeben ist (wobei die Anschläge selbst in Fig. 2d nicht sichtbar sind). Die Anschläge 38 und 39 verhindern somit, dass die Anschlagelemente 36 oder 37 bei einer Bewegung des Gleitschlittens 26 über das Basisteil in Längsverschieberichtung hinaus geschoben werden können. Wird die Armauflage 16 zusammen mit dem Gleitschlitten 26 beispielsweise nach vorne bzw. in Blickrichtung des Bedieners 11 geschoben, wird das in Verschieberichtung vorne liegende Anschlagelement 37 durch den Anschlag 39 relativ zum Basisteil 15 festgehalten und nimmt an der Verschiebebewegung des Gleitschlittens 26 nicht teil. Das gegenüberliegende Anschlagelement 36 wird durch die Lasche 26 mitgenommen, sodass sich insgesamt der Abstand zwischen den beiden einander gegenüberliegend auf der Federführungsschiene 35 angeordneten Anschlagelementen 36 und 37 verkürzt und dadurch die zwischen den beiden Anschlagelementen 36 und 37 angeordnete Rückstelldruckfeder 34 komprimiert wird. Dadurch übt die Rückstelldruckfeder 34 eine Rückstellkraft auf den Gleitschlitten 26 aus, sodass die Armauflage 16 zusammen mit dem Gleitschlitten 26 bei einer Entlastung der Armauflage 16 wieder zurück in die in Fig. 2d angegebene Ausgangsstellung verfährt. Wird die Armauflage 16 dagegen nach hinten verschoben, wie beispielsweise in Fig. 4b gezeigt, wird die Rückstelldruckfeder 34 dadurch komprimiert, dass das Anschlagelement 36 gegen den Anschlag 38 am Basisteil 15 anschlägt und das Anschlagelement 37 zusammen mit dem Gleitschlitten 26 auf das Anschlagelement 36 hinzu bewegt wird. Im komprimierten Zustand der Rückstelldruckfeder 34 übt diese eine Rückstellkraft auf den Gleitschlitten 26 hin zur Ausgangsstellung aus. In der Ausgangsstellung drückt die Rückstelldruckfeder 34 beide Anschlagelemente 36 und 37 zwar auch gegen ihre jeweiligen Anschläge 38 und 39 im Basisteil 15 auseinander. Dies allerdings in beide Richtungen zu gleichen Teilen, so dass insgesamt ein ausgewogener Positionierungszustand erreicht wird. Dies Anordnung ermöglicht es insgesamt somit, dass die Armauflage 16 zur Ausgangsstellung selbstpositionierend ist bzw. bei einer Entlastung stets selbsttätig in die Ausgangsstellung zurückfährt.

Die Längsverschieblichkeit der Armauflage 16 relativ zum Basisteil 15 an den Gleitschlitten 26 ist allerdings begrenzt. Die Begrenzung wird konkret durch die Vorsprünge 40 und 41 im Basisteil 15 erreicht, gegen die die Anschlagelemente 36 und 37 bei einer Verschiebebewegung des Gleitschlittens 26 in der maximal verstellten Position anschlagen. Dadurch ist gewährleistet, dass die Rückstelldruckfeder 34 nicht übermäßig komprimiert wird und dadurch beispielsweise ihre Rückstelleigenschaften verliert. Darüber hinaus kann der Gleitschlitten 26 nicht aus dem Basisteil 15 herausgeschoben werden. Wesentlich für die in den Figuren angegebene Ausführungsform ist somit auch, dass am Gleitschlitten 26 eine Führungsfunktion durch die Führungsschienen 30 und 31 und eine Selbstpositionierungsfunktion mit Hilfe der Rückstelldruckfeder 34 und der Federführungsschiene 35 erreicht wird.

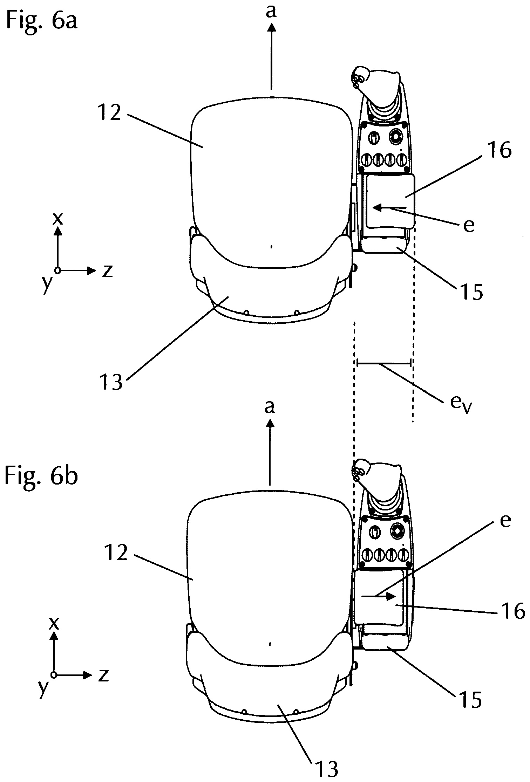

Im begrenzten Umfang ist die Armauflage 26 ferner gegenüber dem Basisteil 15 seitlich bzw. in Pfeilrichtung e verschiebbar. Dies ist insbesondere in den Figuren 6a und 6b näher veranschaulicht, wobei Fig. 6a den maximal seitlich nach außen gestellten bzw. von der Sitzfläche 12 weg verschobenen und Fig. 6b die maximal zur Sitzfläche hin verschobene Stellung angibt. Der gesamte seitliche Verstellbereich ist bezogen auf die seitlichen Außenkanten der Armauflage 16 mit eᵥ angegeben. Die mittige Positionierung ist beispielsweise aus Fig. 1b ersichtlich.

Um diese seitliche Verstellbarkeit zu erreichen, sind im horizontalen Hauptteil 27 des Gleitschlittens 26 zwei Langlöcher 42 und 43 angeordnet, deren Längsachse in der Horizontalebene rechtwinklig zur Längsachse der Führungsschienen 30 und 31 des Gleitschlittens 26 verläuft. In den Langlöchern 42 und 43 sind die Gleitbuchsen 44 und 45 geführt, die zu beiden Oberflächen des Hauptteils 27 jeweils überlappend ausgebildet sind. Durch die Gleitbuchsen 44 und 45 hindurch ist jeweils eine Schraubverbindung geführt, die eine feste Verbindung mit der Unterseite der Armauflage 16 herstellt. Im gezeigten Ausführungsbeispiel ist die Führungseinrichtung 25 in der Weise ausgebildet, dass sie bezüglich der Seitenverschiebbarkeit der Armauflage 16 nicht selbstpositionierend ausgebildet ist. Bezogen auf ihre seitliche bzw. in Pfeilrichtung e verschobene Stellung erhält die Armauflage 16 relativ zum Basisteil 15 ihre Position somit bei einer Entlastung der Armauflage bei.

## Patentansprüche

1. Maschinenführersitz (10) einer Baumaschine (1) mit einer Sitzfläche (12), einer in Längsrichtung (a) der Sitzfläche (12) der vorderen Sitzkante (20) gegenüberliegend angeordneten Rückenlehne (13) und wenigstens einer seitlich zur Sitzfläche (12) angeordneten Armlehne (14), umfassend ein Basisteil (15), eine Armauflage (16) und mindestens ein Bedienelement (17), wobei die Armauflage (16) im in Längsrichtung (a) hinteren Bereich und das mindestens eine Bedienelement (17) im in Längsrichtung (a) vorderen Bereich der Armlehne (14) angeordnet sind, wobei die Armauflage (16) über eine Führungseinrichtung (25) am Basisteil (15) der Armlehne (14) gelagert ist, wobei die Führungseinrichtung (25)
- selbstpositionierend ausgebildet ist in der Weise, dass die Armauflage (16) selbsttätig im belastungsfreien Zustand bezüglich ihrer Positionierung in Längsrichtung (a) in eine Ausgangsstellung verfährt,
- zur Selbstpositionierung eine Federbeaufschlagung (34) aufweist und **dadurch gekennzeichnet, dass** die Führungseinrichtung in der Weise ausgebildet ist, dass die Armauflage (16) in einem begrenzten Längsverschiebebereich entlang der Längsrichtung (a) und in einem begrenzten Seitenverschiebebereich seitlich gegenüber dem Basisteil (15) frei verschiebbar ist.

2. Maschinenführersitz (10) gemäß dem vorhergehenden Anspruch,
**dadurch gekennzeichnet,**
**dass** die Führungseinrichtung (25) eine Linearführung umfasst.

3. Maschinenführersitz (10) gemäß einem der vorhergehenden Ansprüche,
**dadurch gekennzeichnet,**
**dass** die Führungseinrichtung (25) in der Weise ausgebildet ist, dass die Armauflage (16) gegenüber der Ausgangsstellung in Längsrichtung (a) in einem begrenzten Bereich frei nach vorne und nach hinten verschiebbar ist.

4. Maschinenführersitz (10) gemäß einem der vorhergehenden Ansprüche,
**dadurch gekennzeichnet,**
**dass** die Führungseinrichtung (25) in der Weise ausgebildet ist, dass die Armauflage (16) in einem begrenzten Seitenverschiebebereich frei seitlich verschiebbar ist.

5. Maschinenführersitz (10) gemäß einem der vorhergehenden Ansprüche,
**dadurch gekennzeichnet,**
**dass** die Führungseinrichtung (25) einen Gleitschlitten (26) umfasst, der über ein Gleitlager (32, 33) verschiebbar am Basisteil (15) der Armlehne (14) gelagert ist, und dass die Armauflage (16) an dem Gleitschlitten (26) angeordnet ist.

6. Maschinenführersitz (10) gemäß Anspruch 5,
**dadurch gekennzeichnet,**
**dass** der Gleitschlitten (26) eine Führungsschiene (30, 31) aufweist, die in dem Gleitlager (32, 33) gelagert und geführt ist.

7. Maschinenführersitz (10) gemäß einem der Ansprüche 5 oder 6,
**dadurch gekennzeichnet,**
**dass** der Gleitschlitten (26) eine sich im Wesentlichen horizontal erstreckende Tragplatte (27) aufweist.

8. Maschinenführersitz (10) gemäß Anspruch 7,
**dadurch gekennzeichnet,**
und die Tragplatte (27) an den in Längsrichtung der Tragplatte (27) gegenüberliegenden Seiten jeweils eine zum Basisteil (15) hin umgebogene Lasche (28, 29) aufweist, und dass zwischen denen beiden Laschen (28, 29) die Führungsschiene (30, 31) angeordnet ist, die in einem ortsfest am Basisteil (15) angeordneten Gleitlager (32, 33) geführt ist.

9. Maschinenführersitz (10) gemäß Anspruch 8,
**dadurch gekennzeichnet,**
**dass** zwischen den beiden Laschen (28, 29) eine Federführungsschiene (35) verläuft, an der eine Rückstelldruckfeder (34) angeordnet ist, dass an einem axialen Ende der Rückstelldruckfeder (34) wenigstens ein entlang der Federführungsschiene (35) verschiebbares Anschlagelement (36, 37) angeordnet ist, und dass am Basisteil (15) ein Anschlag (38, 39) vorhanden ist, der zum Erhalt einer Rückstellfunktion in der Weise ausgebildet ist, dass er das Anschlagelement (36, 37) gegenüber dem Basisteil (15) in eine Verschieberichtung feststellt und dadurch ein Zusammendrücken der Rückstelldruckfeder (34) bei einer Längsverschiebung des Tragschlittens (26) bewirkt.

10. Maschinenführersitz (10) gemäß Anspruch 9
**dadurch gekennzeichnet,**
**dass** an beiden axialen Enden der Rückstelldruckfeder (34) jeweils ein entlang der Federführungsschiene (35) verschiebbares Anschlagelement (36, 37) angeordnet ist, und dass am Basisteil (15) zwei in Längsrichtung (a) zueinander beabstandet angeordnete Anschläge (38, 39) vorhanden sind in der Weise, dass die Rückstellfunktion ausgehend von der Ausgangsstellung der Armauflage (16) in eine Verschieberichtung durch ein Anschlagen des einen Anschlagelementes (36) gegen den einen Anschlag (38) und in die von der Ausgangsstellung ausgehend entgegen gesetzte Verschieberichtung durch ein Anschlagen des anderen Anschlagelementes (37) gegen den anderen Anschlag (39) bewirkt wird.

11. Maschinenführersitz (10) gemäß einem der Ansprüche 8 oder 9,
**dadurch gekennzeichnet,**
**dass** die Führungsschiene (30, 31) in der Weise ausgebildet ist, dass sie gleichzeitig die Federführungsschiene (35) ist.

12. Maschinenführersitz (10) gemäß einem der Ansprüche 5 bis 11
**dadurch gekennzeichnet,**
**dass** der Gleitschlitten (26) wenigstens ein Langloch (42, 43) zur Führung der seitlichen Verstellbewegung der Armauflage (16) gegenüber dem Basisteil (15) aufweist.

13. Maschinenführersitz (10) gemäß einem der vorhergehenden Ansprüche,
**dadurch gekennzeichnet,**
**dass** die Führungseinrichtung (25) wenigstens eine Verschiebebegrenzung in Form eines Begrenzungsvorsprungs (40, 41) am Basisteil (15) aufweist.

14. Baumaschine (1), insbesondere Straßenfräse, Recycler, Stabilisierer, Straßenwalze, insbesondere Tandemwalze, mit einem Maschinenführersitz (10) gemäß einem der vorhergehenden Ansprüche.

## Claims

1. A machine operator seat (10) of a construction machine (1) having a seat surface (12), a backrest (13), which is situated opposite to the front seat edge (20) in the longitudinal direction (a) of the seat surface (12), and at least one armrest (14) situated laterally to the seat surface (12), comprising a base part (15), an arm support (16), and at least one operating element (17), the arm support (16) being situated in the rear area in the longitudinal direction (a) and the at least one operating element (17) being situated in the front area of the armrest (14) in the longitudinal direction (a), the arm support (16) being mounted via a guide device (25) on the base part (15) of the armrest (14), the guide device (25)
- implemented to be self-positioning in such a way that the arm support (16) automatically moves into a starting position with respect to its positioning in the longitudinal direction (a) in the unloaded state,
- having a spring loading (34) for the self-positioning,
**characterized in**
**that** the guide device (25) is being implemented in such a way that the arm support (16) is displaceable with respect to the base part (15) in a limited longitudinal displacement range along the longitudinal direction (a) and in a limited lateral displacement range .

2. The machine operator seat (10) according to the preceding claim,
**characterized in**
**that** the guide device (25) comprises a linear guide.

3. The machine operator seat (10) according to one of the preceding claims,
**characterized in**
**that** the guide device (25) is implemented in such a way that the arm support (16) is freely displaceable forward and to the rear in a limited range in relation to the starting position in the longitudinal direction (a).

4. The machine operator seat (10) according to one of the preceding claims,
**characterized in**
**that** the guide device (25) is implemented in such a way that the arm support (16) is freely laterally displaceable in a limited lateral displacement range.

5. The machine operator seat (10) according to one of the preceding claims,
**characterized in**
**that** the guide device (25) comprises a sliding carriage (26), which is mounted so it is displaceable on the base part (15) of the armrest (14) via a friction bearing (32, 33), and the arm support (16) is situated on the sliding carriage (26).

6. The machine operator seat (10) according to claim 5,
**characterized in**
**that** the sliding carriage (26) has a guide rail (30, 31), which is mounted and guided in the friction bearing (32, 33).

7. The machine operator seat (10) according to Claim 6,
**characterized in**
**that** the sliding carriage (26) has an essentially horizontally extending support plate (27).

8. The machine operator seat (10) according to Claim 7,
**characterized in**
**that** the support plate (27) has a tab (28, 29), which is bent over toward the base part (15), on each of the opposing sides in the longitudinal direction of the support plate (26), and the guide rail (30, 31), which is guided in a friction bearing (32, 33) situated fixed in place on the base part (15), is situated between the two tabs (28, 29).

9. The machine operator seat (10) according to Claim 8,
**characterized in**
**that** a spring guide rail (35), on which a restoring compression spring (34) is situated, runs between the two tabs (28, 29), at least one stop element (36, 37), which is displaceable along the spring guide rail (35), is situated on one axial end of the restoring compression spring (34), and a stop (38, 39) is provided on the base part (15), which is implemented to obtain a restoring function in such a way that it fixes the stop element (36, 37) in relation to the base part (15) in one displacement direction and thus causes a compression of the restoring compression spring (34) during a longitudinal displacement of the support carriage (26).

10. The machine operator seat (10) according to Claim 9,
**characterized in**
**that** a stop element (36, 37), which is displaceable along the spring guide rail (35), is situated on each of the two axial ends of the restoring compression spring (34), and two stops (38, 39), which are situated spaced apart from one another in the longitudinal direction (a), are provided on the base part (15) in such a way that the restoring function is caused starting from the starting position of the arm support (16) in one displacement direction by stopping of one stop element (36) against one stop (38) and in the opposite displacement direction starting from the starting position by stopping of the other stop element (37) against the other stop (39).

11. The machine operator seat (10) according to one of Claims 9 or 10,
**characterized in**
**that** the guide rail (30, 31) is implemented in such a way that it is simultaneously the spring guide rail (35).

12. The machine operator seat (10), according to one of Claims 5 to 11,
**characterized in**
**that** the sliding carriage (26) has at least one oblong hole (42, 43) for guiding the lateral adjustment movement of the arm support (16) in relation to the base part (15).

13. The machine operator seat (10) according to one of the preceding claims,
**characterized in**
**that** the guide device (25) has at least one displacement delimitation in the form of a delimitation projection (40, 41) on the base part (15).

14. A construction machine (1), in particular a road miller, recycler, stabilizer, or a road roller, in particular a tandem roller, having a machine operator seat (10) according to one of the preceding claims.

## Revendications

1. Siège (10) pour conducteur d'engin d'un engin de chantier (1) ayant une surface (12) d'assise, un dossier (13) qui est situé à l'opposé du bord avant (20) du siège dans la direction longitudinale (a) de la surface d'assise (12), et au moins un accoudoir (14) situé latéralement à la surface d'assise (12), comprenant une partie de base (15), un support (16) pour le bras, et au moins un élément de commande (17), le support (16) pour le bras étant situé dans la zone arrière dans la direction longitudinale (a) et ledit au moins un élément de commande (17) étant situé dans la zone avant de l'accoudoir (14) dans la direction longitudinale (a), le support (16) pour le bras étant monté via un dispositif de guidage (25) sur la partie de base (15) de l'accoudoir (14), le dispositif de guidage (25)
- étant conformé pour être auto-positionnable de manière telle que le support (16) pour le bras se déplace automatiquement dans une position de départ par rapport à son positionnement dans la direction longitudinale (a) à l'état non chargé,
- ayant un chargement par ressort (34) pour l'auto-positionnement,
***caractérisé en ce que***
le dispositif de guidage (25) est conformé de telle sorte que le support (16) pour le bras soit déplaçable par rapport à la partie de base (15) dans une plage de déplacement longitudinal limitée dans la direction longitudinale (a) et dans une plage de déplacement latéral limitée.

2. Siège (10) pour conducteur d'engin selon la revendication précédente,
***caractérisé en ce que***
le dispositif de guidage (25) comprend un guide linéaire.

3. Siège (10) pour conducteur d'engin selon l'une quelconque des revendications précédentes,
***caractérisé en ce que***
le dispositif de guidage (25) est conformé de telle sorte que le support (16) pour le bras soit librement déplaçable vers l'avant et vers l'arrière dans la direction longitudinale (a), dans une plage limitée par rapport à la position de départ.

4. Siège (10) pour conducteur d'engin selon l'une quelconque des revendications précédentes,
***caractérisé en ce que***
le dispositif de guidage (25) est conformé de telle sorte que le support (16) pour le bras soit librement déplaçable latéralement dans une plage de déplacement latéral limitée.

5. Siège (10) pour conducteur d'engin selon l'une quelconque des revendications précédentes,
***caractérisé en ce que***
le dispositif de guidage (25) comprend un chariot à glissières (26) qui est monté de façon qu'il soit déplaçable sur la partie de base (15) de l'accoudoir (14) via un palier lisse (32, 33), et le support (16) pour le bras est situé sur le chariot à glissières (26).

6. Siège (10) pour conducteur d'engin selon la revendication 5,
***caractérisé en ce que***
le chariot à glissières (26) comprend un rail de guidage (30, 31) qui est monté et guidé dans le palier lisse (32, 33).

7. Siège (10) pour conducteur d'engin selon la revendication 6,
***caractérisé en ce que***
le chariot à glissières (26) possède une plaque de support (27) s'étendant essentiellement de manière horizontale.

8. Siège (10) pour conducteur d'engin selon la revendication 7,
***caractérisé en ce que***
la plaque de support (27) possède, sur chacun des côtés opposés dans la direction longitudinale de la plaque de support (27), un rabat (28, 29) qui est replié vers la partie de base (15), et le rail de guidage (30, 31), qui est guidé dans un palier lisse (32, 33) fixé en place sur la partie de base (15), est situé entre les deux rabats (28, 29).

9. Siège (10) pour conducteur d'engin selon la revendication 8,
***caractérisé en ce que***
un rail (35) de guidage de ressort, sur lequel est situé un ressort (34) de restitution de compression, court entre les deux rabats (28, 29), au moins un élément de butée (36, 37), qui est déplaçable le long du rail (35) de guidage de ressort, est situé sur une extrémité axiale du ressort (34) de restitution de compression, et une butée (38, 39) est présente sur la partie de base (15), qui est conformée pour obtenir une fonction de restitution d'une manière telle qu'elle fixe l'élément de butée (36, 37) par rapport à la partie de base (15) dans une direction de déplacement et provoque ainsi une compression du ressort (34) de restitution de compression pendant un déplacement longitudinal du chariot de support (26).

10. Siège (10) pour conducteur d'engin selon la revendication 9,
***caractérisé en ce que***
un élément de butée (36, 37), qui est déplaçable le long du rail (35) de guidage de ressort, est situé sur chacune des deux extrémités axiales du ressort (34) de restitution de compression, et deux butées (38, 39), qui sont situées à distance l'une de l'autre dans la direction longitudinale (a), sont présentes sur la partie de base (15) d'une façon telle que la fonction de restitution soit produite en partant de la position de départ du bras de support (16) dans une direction de déplacement par l'arrêt d'un élément de butée (36) contre une butée (38) et, dans la direction de déplacement opposée, en partant de la position de départ par l'arrêt de l'autre élément de butée (37) contre l'autre butée (39).

11. Siège (10) pour conducteur d'engin selon l'une quelconque des revendications 9 ou 10,
***caractérisé en ce que***
le rail de guidage (30, 31) est conformé de telle sorte qu'il soit en même temps le rail (35) de guidage de ressort.

12. Siège (10) pour conducteur d'engin selon l'une quelconque des revendications 5 à 11,
***caractérisé en ce que***
le chariot à glissières (26) présente au moins un trou oblong (42, 43) pour guider le mouvement de réglage latéral du support (16) du bras en relation avec la partie de base (15).

13. Siège (10) pour conducteur d'engin selon l'une quelconque des revendications précédentes,
***caractérisé en ce que***
le dispositif de guidage (25) présente au moins une délimitation de déplacement prenant la forme d'une saillie (40, 41) de délimitation sur la partie de base (15).

14. Engin de chantier (1), en particulier engin de fraisage de chaussée, recycleur, stabilisateur, ou rouleau compresseur pour chaussée, en particulier rouleau tandem, possédant un siège (10) pour conducteur d'engin selon l'une quelconque des revendications précédentes.
